# EUROPEAN PATENT APPLICATION

(11) **EP 3 133 383 A1**
(43) Date of publication of application: **22.02.2017**
(21) Application number: 16183625.9
(22) Date of filing: 10.08.2016
(51) Int. Cl.: G01N 1/22, G01N 1/24, G01N 15/00

(54) **ADJUSTABLE AERODYNAMIC LENS SYSTEM FOR AERODYNAMIC FOCUSING OF AEROSOLS**

(30) Priority: 12.08.2015 TW 104126305
(71) Applicant: National Sun Yat-sen University, Kaohsiung City 80424 (TW)
(72) Inventor: WANG, Chia-Chen, 80424 Kaohsiung City (TW)
(74) Representative: Beck & Rössig European Patent Attorneys

(57) **Abstract**

An adjustable aerodynamic lens system for aerodynamic focusing of aerosols comprises a hollow tube having an inlet terminal, an outlet terminal and a focusing segment located between the inlet terminal and the outlet terminal. The focusing segment includes a plurality of section tubes assembled in a manner to selectively focus aerosols of a specific average size. Each of the section tubes has a focusing orifice, and the diameters of the two adjacent focusing orifices are different. In specific, the section tubes having their focusing orifices of appropriate diameters are chosen according to the average size of aerosol particles to be focused, and assembled in sequence, so as to make aerosol fluid passing through to form a beam of aerosol particles with good focusing quality.

## Description

The present invention relates to an adjustable aerodynamic lens system for aerodynamic focusing of aerosols, and more particularly, the adjustable aerodynamic lens system is a hollow tube comprising a plurality of section tubes with varying diameters of focusing orifices that are assembled with a specific order to aerodynamically focus the aerosols passing through the system into a highly collimated aerosol beam with the average focusing size of aerosols ranging between 3 nm and 3 µm.

Aerosols generally refer to a dispersed system where either fine solid particles or liquid droplets suspended in a gaseous medium. Commonly seen aerosol includes haze, dust, particulate matters suspended in polluted air, smoke, and salt particles formed from ocean spray. The size of aerosols may span by orders of magnitude ranging from sub nanometer up to hundreds of micrometers.

Aerosols play important roles in numerous important scientific and technical fields, including environmental chemistry, atmospheric chemistry, biological chemistry, biomedical science and interstellar chemistry. While natural aerosols are essential in maintaining the radiative balance for Earth, however, anthropogenic aerosols produced from various human activities have severely disturbed the homeostasis for Earth's environment, which altered the cloud formation/growth microphysics, changed the atmospheric photochemical dynamics, worsened the air quality and caused dramatic adverse health effects for human beings. In 2013, the International Agency for Research on Cancers (IARC) under the World Health Organization (WHO) announced particulate matters (PM) in polluted air as a carcinogenic factor. In an updated report released by WHO in 2014, the mortalities associated with exposures of air pollution were updated to 7 million in 2012, accounting for 1/8 of total global death. Amongst, particulate matters having aerodynamic diameters smaller than 2.5 microns (PM2.5) are particularly harmful to human health as they are capable of penetrating to alveolar or even enter the systemic circulation to cause further adverse health effects.

The physical, chemical, optical and biological properties of aerosols are highly dependent on their chemical compositions, sizes, geometry and internal structures. In light of the development of novel aerosol technology to address various PM2.5 related issues, it is critical to have an in-depth understanding of the physical, chemical, optical and biochemical properties of aerosols.

Aerosols of different chemical compositions and particle sizes have different valence electronic energetic structures which decisively determine their chemical activities upon interacting with other substances. Therefore, it is of essential importance to learn the valence shell electronic energetic structures of aerosols of different chemical compositions and sizes. To achieve this goal and track how the valence electronic structures of aerosols of particular chemical compositions evolve with sizes, it is critical and essential to have the capability to selectively control and modulate the sizes of aerosols to be focused and studied.

In the field of measuring and analyzing aerosols in the environment, one common aerosol measuring technology, termed aerosols mass spectrometry (AMS) includes to use the aerodynamic lens (ADL) system to focus aerosols suspending in the atmosphere to generate a beam of aerosol particles, which is integrated with a mass spectrometer to analyze the chemical compositions of aerosols.

The foregoing ADL system is built based upon the principle of aerodynamics to make the aerosol fluid passing there through having certain sizes of aerosol particles focused into a beam. Such an aerodynamic lens is described in US Patent No. 8,119,977, entitled "Aerodynamic lens capable of focusing nanoparticles in a wide range". US 8,119,977 disclose an aerodynamic structure that comprises a cylindrical hollow body having an inlet and an outlet. The hollow body includes a first focusing part and a second focusing part. The first focusing part comprises a plurality of orifice lenses of which inner diameters are gradually decreased in an advancing direction of particle. The second focusing part also comprises a plurality of orifice lens of which inner diameters are gradually increased in the advancing direction of particle.

It is described in US 8,119,977 that with the feature that the orifice lenses in the first focusing part and in the second focusing part are gradually decreased and then gradually increased, the ADL may effectively focus particles with various sizes in the range of 30 to 3,000 nm while the transmission efficiency is 90% or above and the particle beam diameter is less than 1 mm.

As compared to the prior art, US 8,119,977 in virtue of the two focusing parts in the hollow body effectively expands the diameter range of aerosol particles that are allowed to pass through the ADL system to 30 to 3,000 nm. However, in the practical use, the ADL structure is conventionally made to focus aerosol particles covering a wide range of diameters, instead of being made in a customized fashion capable of selectively focusing aerosol particles of a specific size range. As mentioned previously, the size effect is particularly pronounced for ultrafine aerosols, such as PM2.5. Aerosols may show considerably different physicochemical properties even if they only differ in size. Thus, a critical prerequisite to get further understanding on the inherent characters of aerosols of different sizes is to have the ability to effectively control and focus aerosols of different sizes.

The primary object of the present invention is to provide an adjustable aerodynamic lens system for aerodynamic focusing of aerosols comprising a plurality of section tubes, wherein the section tubes with varying focusing orifices are able to be assembled in different sequence for different conditions.

An adjustable aerodynamic lens system for aerodynamic focusing of aerosols comprises a hollow tube having an inlet terminal, an outlet terminal and a focusing segment located between the inlet terminal and the outlet terminal, wherein the focusing segment includes a plurality of section tubes assembled in sequence, each of the section tubes has a first connecting end, a second connecting end and a focusing orifice, wherein the first connecting end and the second connecting end are formed at opposite sides of the section tube respectively, and the second connecting end is assembled with the first connecting end of the adjacent section tube, the focusing orifice with a orifice diameter is formed in the section tube, wherein the orifice diameters of the two adjacent section tubes are different.

### DESCRIPTION OF THE DRAWINGS

Fig. 1 is a schematic diagram illustrating a multi-function aerosol characterization system according to a preferred embodiment of the present invention for analyzing chemical properties, geometry, internal structure and electronic energetic level structures of aerosols.
Fig. 2 is a perspective view diagram illustrating an aerosol photoelectron spectrometer according to a preferred embodiment of the present invention for analyzing the electronic energetic structures of aerosols.
Fig. 3 is a cross-sectional view diagram illustrating an adjustable aerodynamic lens system for aerodynamic focusing of aerosols according to a preferred embodiment of the present invention.
Fig. 4 is a partial cross-sectional view diagram illustrating the adjustable aerodynamic lens system for aerodynamic focusing of aerosols according to a preferred embodiment of the present invention, showing an inlet terminal of a hollow tube in particular.
Fig. 5 is a partial cross-sectional view diagram illustrating the adjustable aerodynamic lens system for aerodynamic focusing of aerosols according to a preferred embodiment of the present invention, showing an outlet terminal of the hollow tube in particular.
Fig. 6 is a partial cross-sectional view diagram illustrating the adjustable aerodynamic lens system for aerodynamic focusing of aerosols according to a preferred embodiment of the present invention, showing focusing orifices in particular.
Fig. 7A is a photoelectron spectrum obtained using the disclosed technology to measure the valence electronic properties of pure water in the aerosol phase and using synchrotron VUV radiation as the ionization source. The obtained photoelectron spectrum of pure water aerosols comprises the gaseous water evaporated from the aerosol surface and the condensed water in the aerosol.
Fig. 7B is an enlarged view of the above photoelectron spectrum marked by the dashed line showing the condensed water in the aerosol phase obtained using the disclosed technology to measure pure water in the aerosol phase.
Fig. 8 is obtained using the known liquid microjet technology and using He(I) ultraviolet light as the ionization source.
Fig. 9 is obtained using the known liquid microjet technology and using synchrotron VUV radiation as the ionization source.
Fig. 10 is obtained using the known liquid microjet technology, showing that pure water has energy band width ranging between 1.45 and 1.58 electron volts (eV).

### DETAILED DESCRIPTION OF EMBODIMENTS

Together with the technical features as described preciously, the key functions of an adjustable aerodynamic lens system for aerodynamic focusing of aerosols as disclosed in the present application will be clearly presented through the following embodiments.

It is to be noted that in any of the embodiments shown in the accompanying drawings, the indication of directions (e.g. up, down, left, right, front and rear) for illustrating the structures and movements of the components of the present application is not absolute but relative. When these components are at the sites as shown, the descriptions are appropriate. Wherever the locations of these components are changed, the indication of directions shall be changed accordingly.

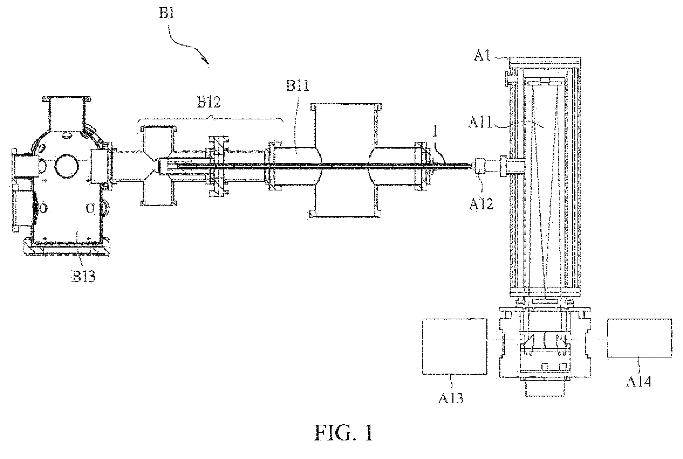

With reference to Fig. 1, a multi-function aerosol characterization system comprises an aerosol infrared spectroscopy apparatus A1, an aerosol photoelectron spectrometer B1 and an adjustable aerodynamic lens system for aerodynamic focusing of aerosols 1. In this embodiment, the aerosol photoelectron spectrometer B1 is an aerosol ultraviolet photoelectron spectrometer.

With reference to Fig. 1, the aerosol infrared spectroscopy apparatus A1 comprise an aerosol generation chamber A11, a valve A12, a Fourier-transform infrared spectrometer A13, a light source A14 and a control module (not shown). The control module precisely controls the temperature and pressure in the aerosol generation chamber A11, so as to make aerosol precursors in the aerosol generation chamber A11 aggregate into clusters which in turn nucleate, including homogeneous and heterogeneous nucleation so as to form an aerosol. The aerosol generation chamber A11 in the aerosol infrared spectroscopy apparatus A1 is configured to generate aerosol particles with well-controlled chemical compositions, and under well-defined ambient conditions, including temperatures, pressures and surrounding species so as to measure the properties of the target aerosol particles such as the vibrational energy levels, structural characteristics and generation mechanism as well as time-evolution using the Fourier-transform infrared spectrometer A13. Therefore, it is capable of generating aerosol particles of different sizes and forms under controlled conditions for detailed analysis on the structural and kinetic properties of aerosols.

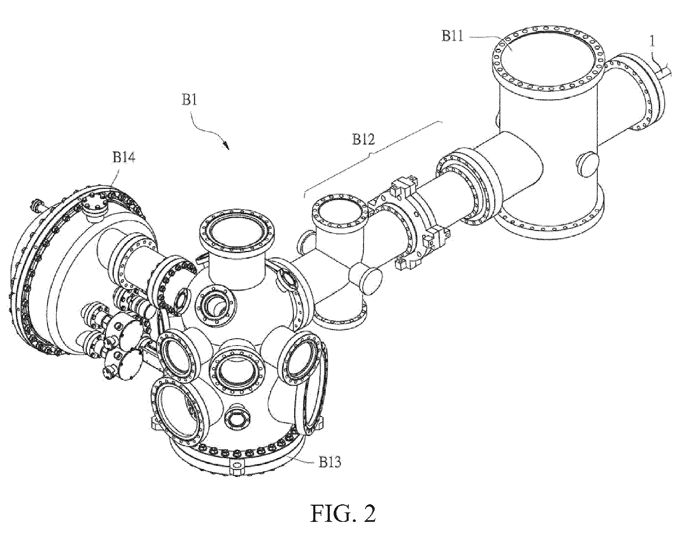

With reference to Figs. 1 and 2, the aerosol photoelectron spectrometer B1 comprises an aerosol source chamber B11, a differential pumping area B12, a photoelectron spectroscopy analysis chamber B13 and an electron energy analyzer B14. The aerosol source chamber B11 serves to make aerosol particles pass through the adjustable aerodynamic lens system for aerodynamic focusing of aerosols 1 to form a focused aerosol beam, and enter into a low-vacuum environment directly after leaving the adjustable aerodynamic lens system for aerodynamic focusing of aerosols 1. The differential pumping area B12 serves to reduce the chamber pressure to the extent such that the focused aerosol particles can enter the photoelectron spectroscopy analysis chamber B13 with a satisfactory vacuum condition necessary for photoelectron spectroscopic measurements. The photoelectron spectroscopy measurements are performed in the photoelectron spectroscopy analysis chamber B13, where the focused aerosol particles are photoionized by photons at specifically controlled photon energies, and the ejected photoelectrons of different kinetic energies are produced in the ionization region where the focused aerosol beam and the photon beam intersects. The ejected photoelectrons are then steered to the electron energy analyzer B14 where the kinetic energies of photoelectrons are analyzed.

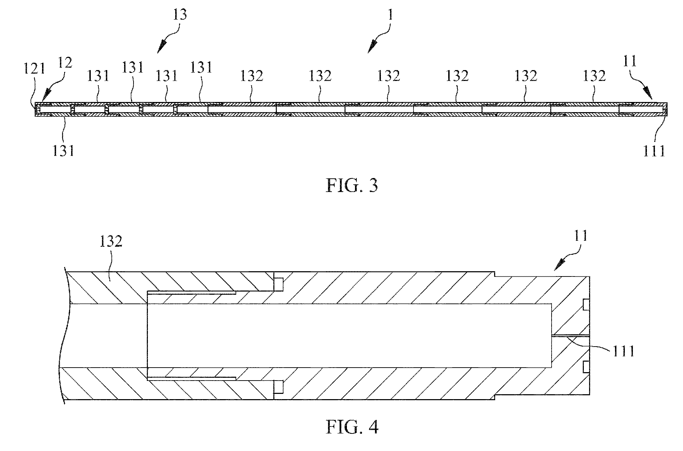

With reference to Figs. 1 and 3, the adjustable aerodynamic lens system for aerodynamic focusing of aerosols 1 comprises a hollow tube. The aerosol particles generated in the aerosol generation chamber A11 or any other aerosol generation sources, first pass through the valve A12 and then into the hollow tube. In this embodiment, the aerosols passing through the hollow tube are collimated into the focused aerosol beam and steered into the aerosol photoelectron spectrometer B1 for photoelectron spectroscopy measurements and photoelectron kinetic energies analysis. The hollow tube has an inlet terminal 11, an outlet terminal 12 and a focusing segment 13 located between the inlet terminal 11 and the outlet terminal 12. It is to be noted that the hollow tube as shown in Fig. 1 has the inlet terminal 11 connected to the valve A12, and the aerosol particles are guided to the inlet terminal 11 through the valve A12. The hollow tube is partially contained in the aerosol source chamber B11.

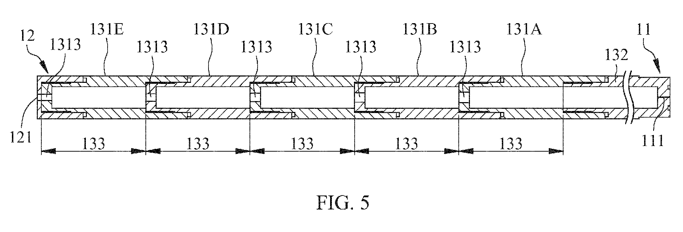

With reference to Figs. 3 and 4, the inlet terminal 11 of the hollow tube has an inlet orifice 111 with diameter 100-500 µm. In this embodiment, the diameter of the inlet orifice 111 is 300 µm. With reference to Figs. 3 and 5, the outlet terminal 12 of the hollow tube has an outlet orifice 121 with diameter 1-5 mm. In this embodiment, the diameter of the outlet orifice 121 is 3 mm. It is to be noted that the size of the inlet orifice 111 determines the flow rate of the aerosol particles, the aerosol beam width and the pressure of the aerosol photoelectron spectrometer B1 during operation; and the size of the outlet orifice 121 determines the velocity of the aerosol beam and the time it takes to reach the photoionization area.

With reference to Fig. 3, the focusing segment 13 located between the inlet terminal 11 and the outlet terminal 12 includes a plurality of section tubes 131 and a plurality of extension tubes 132 assembled in sequence, wherein the section tubes 131 are close to the outlet terminal 12 and the extension tubes 132 are close to the inlet terminal 11. The inner shape of the section tubes 131 and the extension tubes 132 are limited to cylindrical to achieve aerodynamic focusing. In this embodiment, mean surface roughness of an inner wall of each section tube 131, specified in terms of the center line mean roughness (Ra), is not larger than 6.3 µm, such that the trajectory of aerosol particles is interfered or biased due to the overly large surface roughness during aerodynamic focusing. However, the outer shape of the section tubes 131 and the extension tubes 132 can be either cylindrical or non-cylindrical. In the present embodiment, the section tubes 131 and the extension tubes 132 are characterized in that they are able to be assembled and/or disassembled in a selective manner. The extension tubes 132 jointly form an extended track space that is connected to the inlet orifice 111 and serve to increase the overall length of the focusing segment 13 so as to match the overall length of the aerosol source chamber B11. In this embodiment, the hollow tube has six extension tubes 132 assembled in sequence.

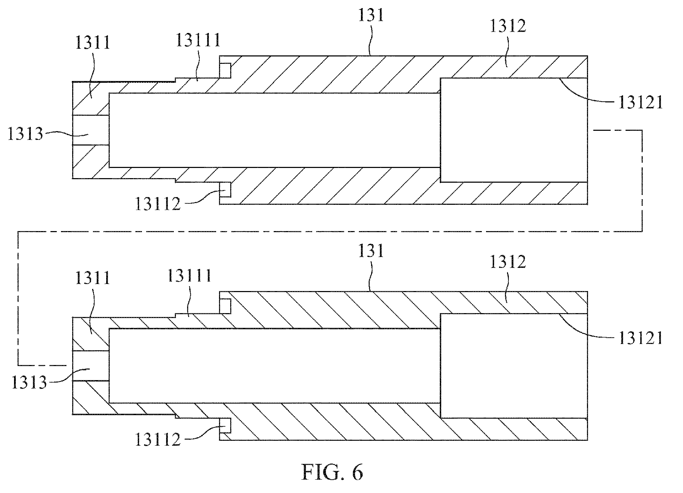

With reference to Fig. 6, each of the section tubes 131 has a first connecting end 1311, a second connecting end 1312 and a focusing orifice 1313, wherein the first connecting end 1311 and the second connecting end 1312 are formed at the two opposite sides of the section tube 131 respectively, and the focusing orifice 1313 is formed in the section tube 131. In this embodiment, the focusing orifice 1313 is formed on the first connecting end 1311 of the section tube 131.

With reference to Fig. 6, the second connecting end 1312 is able to assemble with the first connecting end 1311 of the adjacent section tube 131. Preferably, the first connecting end 1311 has a first connecting portion 13111 formed on an outer wall of the first connecting end 1311, and the second connecting end 1312 has a second connecting portion 13121 formed on an inner wall of the second connecting end 1312, wherein the first connecting portion 13111 is able to be inserted into the second connecting portion 13121 of the adjacent section tube 131. Preferably, the first connecting end 1311 further has a O-ring groove 13112, wherein the O-ring groove 13112 coaxially encircles the first connecting portion 13111 serving to accommodate a O ring (drawing not shown) to achieve airtight joint connection between the section tubes 131 when the first connecting portion 13111 is inserted into the second connecting portion 13121 of the adjacent section tube 131. In this embodiment, the O-ring groove 13112 has an inner diameter of 14 mm, an outer diameter of 18 mm, and a groove depth of 1.5 mm.

In other embodiments, the first connecting portion 13111 is an outer screw thread and the second connecting portion 13121 is an inner screw thread, wherein the outer screw thread of the first connecting portion 13111 and the inner screw thread of the second connecting portion 13121 of the two adjacent section tube 131 are screwed together.

With reference to Figs. 3 and 4, it is to be noted that each of the extension tubes 132 has connecting ends and connecting portions identical to those of the section tubes 131, but is formed as hollow tubes of the same inner diameters as those of the section tubes 131 without any focusing orifice 1313.

With reference to Figs. 5 and 6, the focusing orifice 1313 of each section tube 131 has an orifice diameter, wherein the orifice diameters of the two adjacent section tubes 131 are different. The section tubes 131 having their focusing orifices of appropriate diameters are chosen according to the average size of aerosol particles to be focused, and then assembled in sequence, so as to make aerosol fluid passing through to form a beam of aerosol particles with good focusing quality. Preferably, the orifice diameters of the section tubes 131 are varied gradually along a propagation direction of the aerosol beam, wherein the propagation direction of the aerosol is from the inlet terminal 11 toward the outlet terminal 12. In this embodiment, the orifice diameters of the section tubes 131 are decreased gradually from the inlet terminal 11 toward the outlet terminal 12.

With reference to Fig. 5, in this embodiment, the plurality of section tubes includes a first section tube 131A, a second section tube 131B, a third section tube 131C, a fourth section tube 131D and a fifth section tube 131E arranged in the propagation direction of the aerosol beam, wherein the first section tube 131A connects with the extension tube 132.

With reference to Fig. 5, the section tubes 131 are assembled in sequence, for further explanation, the second section tube 131B locates between the first section tube 131A and the third section tube 131C, the third section tube 131C locates between the second section tube 131B and the fourth section tube 131D, and the fourth section tube 131D locates between the third section tube 131C and the fifth section tube 131E. The focusing orifice 1313 in the first section tube 131A has a first orifice diameter, the focusing orifice 1313 in the second section tube 131B has a second orifice diameter, the focusing orifice 1313 in the third section tube 131C has a third orifice diameter, the focusing orifice 1313 in the fourth section tube 131D has a fourth orifice diameter, and the focusing orifice 1313 in the fifth section tube 131E has a fifth orifice diameter.

Because the orifice diameters of the section tubes 131 in this embodiment are decreased gradually along the propagation direction of the aerosol beam, the first orifice diameter is larger than the second orifice diameter, the second orifice diameter is larger than the third orifice diameter, the third orifice diameter is larger the fourth orifice diameter, and the fourth orifice diameter is larger the fifth orifice diameter. In this embodiment, the first orifice diameter is 5.0 mm, the second orifice diameter is 4.5 mm, the third orifice diameter is 4.0 mm, the fourth orifice diameter is 3.5 mm and the fifth orifice diameter is 3.0 mm. The fifth orifice diameter is the same as the outlet end 121 described previously, they both have the orifice diameter of 3 mm.

In other embodiments, the orifice diameters of the section tubes 131 are increased gradually from the inlet terminal 11 toward the outlet terminal 12. Therefore, the first orifice diameter is smaller than the second orifice diameter, the second orifice diameter is smaller than the third orifice diameter, the third orifice diameter is smaller the fourth orifice diameter, and the fourth orifice diameter is smaller the fifth orifice diameter.

With reference to Fig. 5, the adjacent focusing orifices 1313 are separated by a focusing length 133 with influences on the focusing quality and the size of focusable aerosol particles. Preferably, the focusing length 133 ranges between 10 and 100 mm. In this embodiment, the focusing length 133 is 50 mm.

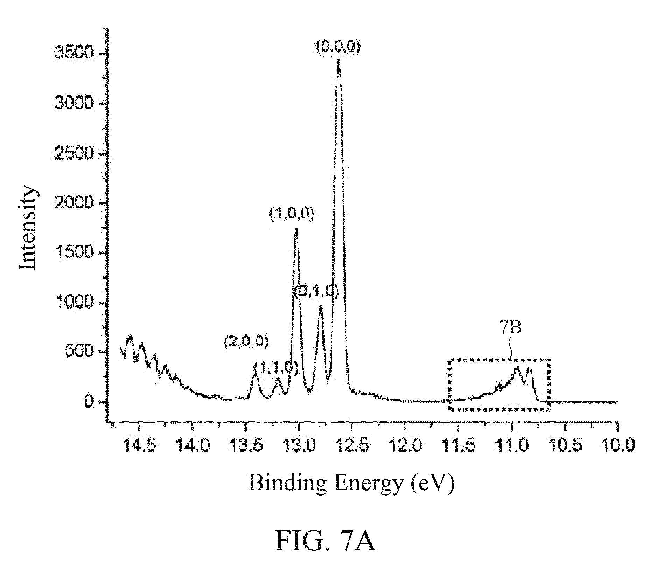

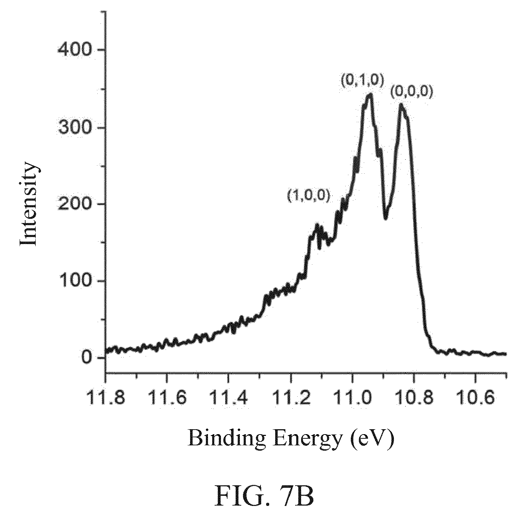

For characterization of the performance of the aerosol photoelectron spectrometer B1, the present embodiment further uses the foregoing system to obtain the ultraviolet photoelectron spectrum of a pure water nanodroplet aerosol. The photon energy of the ionization radiation is first set at 25 eV Fig. 7A is the ultraviolet photoelectron spectrum of pure water in an aerosol state which includes photoelectron signals from two states of pure water, namely the gas phase water molecules evaporated from the surface of pure water aerosols, and the condensed pure water droplets. In Fig. 7A, the numbers marked at some characteristic peaks are the fundamental vibration modes (v1, v2, v3) corresponding to the fine vibrational energetic structures of gas phase water molecules. Fig. 7B is an enlarged view of the same photoelectron spectrum illustrating the condensed pure water in the water droplet state. Fig. 7A and Fig. 7B clearly show the valence shell electronic energetic structure of pure water aerosols and the fine vibrational energetic level structure within its electron energy level structure. Fig. 7A and Fig. 7B demonstrate the superior spectral resolution of the aerosol photoelectron spectrometer B1 of the present embodiment. Therein, the photoelectron spectrum of condensed phase water shows the vibrational energetic structure of condensed water for the first time.

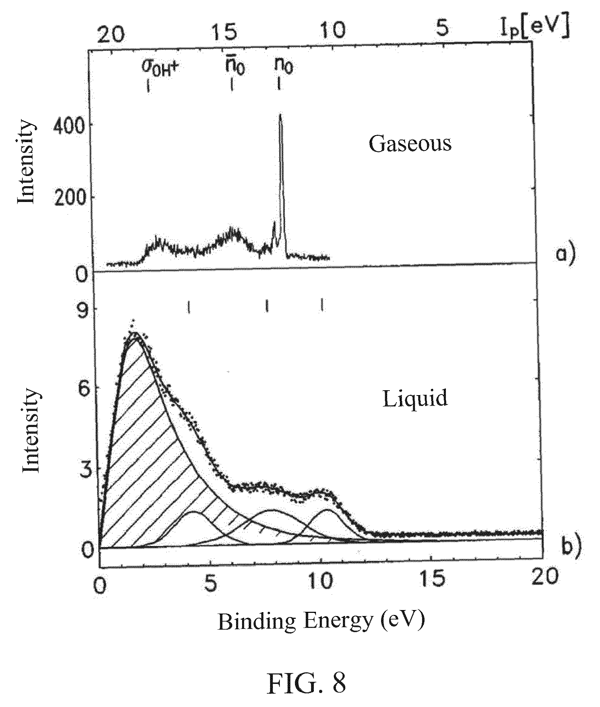

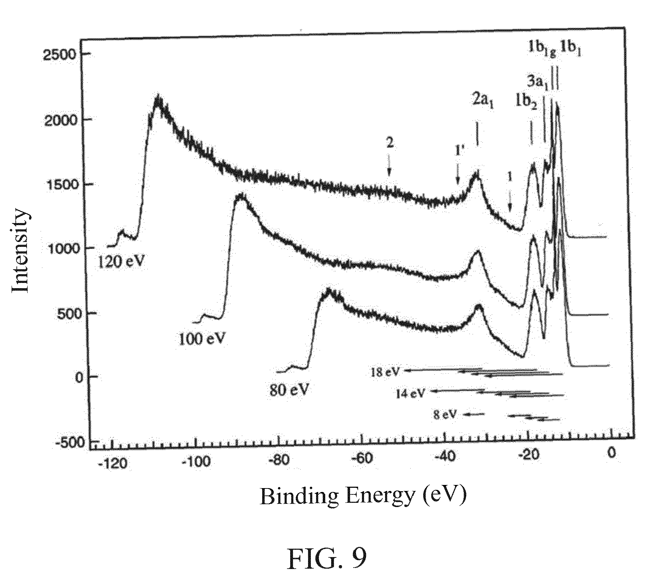

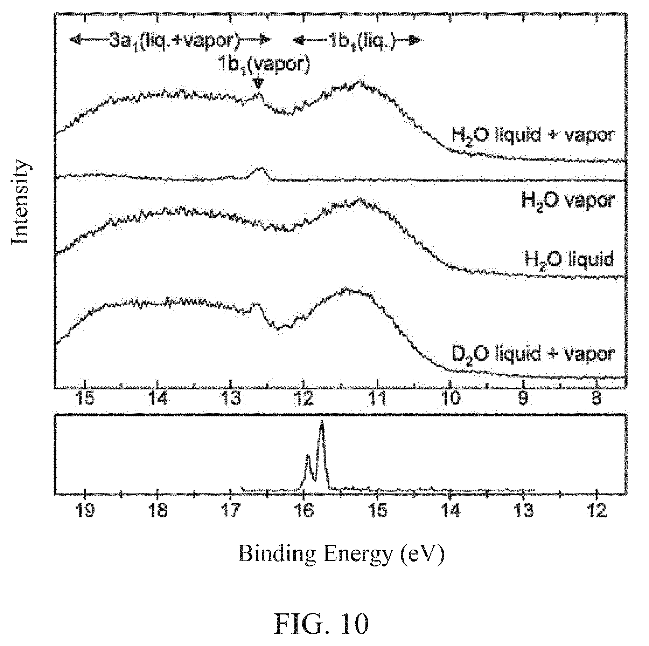

With reference to Figs. 8 to 10, Fig. 8 is obtained by Toennies and coworkers (J. Chem. Phys. 1997, 106, 9013-9031) using the conventional liquid microjet technology and He(I) ultraviolet radiation as the ionization source. In Fig. 8, the upper part is a photoelectron spectrum of gas phase water and the lower part is a photoelectron spectrum of condensed liquid phase water. The ionization energy of condensed phase pure water measured by Toennies and coworkers is 10.92 eV. Fig. 9 is obtained by Winter and coworkers (J. Phys. Chem. A 2004, 108, 2625-2632) also applying the conventional liquid microjet technology, but using synchrotron radiation as the ionization sources. The ionization energy of condensed phase pure water measured by Winter and coworkers is 11.16 eV Fig. 10 is obtained by Suzuki and coworkers (Phys. Chem. Chem. Phys. 2011, 13, 413-417), also using the liquid microjet technology. The energy band width of pure water ranges between 1.45 and 1.58 eV. By comparing Fig. 7A to Fig. 8, Fig. 9 and Fig. 10, it is obvious that the photoelectron spectrum of condensed water measured by the present embodiment of the invention which utilizes the adjustable aerodynamic focusing system 1 to introduce pure water aerosols into the focused aerosol beam in the aerosol photoelectron spectrometer B1 demonstrates higher spectral resolution than those shown in the related literatures.

The disclosed adjustable aerodynamic lens system for aerodynamic focusing of aerosols 1 has the following advantages:
1. The hollow tube is divided into three composite parts so that researchers have improved flexibility to easily and selectively adjust the diameters of the inlet orifice 11, the outlet orifice 12 as well as the diameters of the focusing orifices 1313 of the section tubes 131, so as to achieve better control of the size range of target aerosols to be studied. This provides a customized set of the section tubes 131 which can be easily assembled/disassembled in a size-selective manner to selectively characterize aerosols of various particle sizes, in contrast to the prior-art aerodynamic focus lens system that usually only has a single, fixed specification, which cannot be changed easily once it is manufactured.
2. The focused aerosol particle beam is highly collimated, with a beam width smaller than 1 mm.
3. As aerosol particles pass through each of the section tubes 131, the ambient pressure decrease progressively, such that when the aerosol particles arrive at the photoelectron spectroscopy analysis chamber B13 of the aerosol photoelectron spectrometer B1 they are under a high vacuum condition, which is required to carry out the photoelectron spectroscopy or other high vacuum based techniques, including aerosols mass spectrometry.
4. The present application discloses the control of focusing quality and the beam width of the focused aerosol particles by means of changing the focusing lengths 133 between the adjacent focusing orifices 1313.

The above-mentioned embodiment provides only an example of a combination between the present invention and photoelectron spectroscopy technology, and does not limit the scope of implementation of the present invention to other aerosol detection technologies. The adjustable aerodynamic focusing lens system as defined in the claims may work with other aerosol detecting technologies, including but not limited to aerosols mass spectrometry (AMS) in order to selectively focus aerosol particles of different sizes of interest.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. An adjustable aerodynamic lens system for aerodynamic focusing of aerosols (1), comprising: a hollow tube having an inlet terminal (11), an outlet terminal (12) and a focusing segment (13) located between the inlet terminal (11) and the outlet terminal (12), wherein the focusing segment (13) includes a plurality of section tubes (131) assembled in sequence, each of the section tubes (131) has a first connecting end (1311), a second connecting end (1312) and a focusing orifice (1313), the first connecting end (1311) and the second connecting end (1312) are formed at the two opposite sides of the section tube (131) respectively, and the second connecting end (1312) being assembled with the first connecting end (1311) of the adjacent section tube (131), the focusing orifice (1313) with an orifice diameter is formed in the section tube (131), wherein the orifice diameters of the two adjacent section tubes (131) are different.

2. The adjustable aerodynamic lens system for aerodynamic focusing of aerosols (1) according to claim 1, wherein the first connecting end (1311) has a first connecting portion (13111) formed on an outer wall of the first connecting end (1311), and the second connecting end (1312) has a second connecting portion (13121) formed on an inner wall of the second connecting end (1312), wherein the first connecting portion (13111) is inserted into the second connecting portion (13121) of the adjacent section tube (131).

3. The adjustable aerodynamic lens system for aerodynamic focusing of aerosols (1) according to claim 2, wherein the first connecting end (1311) further has an O-ring groove (13112) which coaxially encircles the first connecting portion (13111) for airtight connection between the section tubes.

4. The adjustable aerodynamic lens system for aerodynamic focusing of aerosols (1) according to claim 2 or 3, wherein the first connecting portion (13111) is an outer screw thread and the second connecting portion (13121) is an inner screw thread, and the outer screw thread and the inner screw thread of the two adjacent section tubes (131) are screwed together.

5. The adjustable aerodynamic lens system for aerodynamic focusing of aerosols (1) according to claims 1 to 4, wherein the focusing orifice (1313) is formed on the first connection end (1311).

6. The adjustable aerodynamic lens system for aerodynamic focusing of aerosols (1) according to claims 1 to 5, wherein the adjacent focusing orifices (1313) are separated by a focusing length (133), and the focusing length (133) ranges between 10 and 100 mm.

7. The adjustable aerodynamic lens system for aerodynamic focusing of aerosols (1) according to claims 1 to 6, wherein the inlet terminal (11) of the hollow tube has an inlet orifice with diameter 100-500 µm.

8. The adjustable aerodynamic lens system for aerodynamic focusing of aerosols (1) according to claims 1 to 7, wherein the outlet terminal (12) of the hollow tube has an outlet orifice with diameter 1-5 mm.

9. The adjustable aerodynamic lens system for aerodynamic focusing of aerosols (1) according to claims 1 to 8, wherein mean surface roughness (Ra) of an inner wall of each section tube (131) is not larger than 6.3 µm.

10. The adjustable aerodynamic lens system for aerodynamic focusing of aerosols (1) according to claims 1 to 9, wherein the orifice diameters of the section tubes (131) are decreased gradually from the inlet terminal (11) toward the outlet terminal (12).

11. The adjustable aerodynamic lens system for aerodynamic focusing of aerosols (1) according to claims 1 to 9, wherein the orifice diameters of the section tubes (131) are increased gradually from the inlet terminal (11) toward the outlet terminal (12).

12. The adjustable aerodynamic lens system for aerodynamic focusing of aerosols (1) according to claims 1 to 11, wherein the aerosols passing through the hollow tube are collimated into a focused aerosol beam and steered into an aerosol photoelectron spectrometer (B1) for photoelectron spectroscopy measurements and photoelectron kinetic energies analysis.

13. The adjustable aerodynamic lens system for aerodynamic focusing of aerosols (1) according to claim 12, wherein the aerosol photoelectron spectrometer (B1) includes a differential pumping area (B12) used for reducing pressure necessary for aerosol photoelectron spectroscopy measurements.

14. The adjustable aerodynamic lens system for aerodynamic focusing of aerosols (1) according to claim 12 or 13, wherein the aerosol photoelectron spectrometer (B1) includes a photoelectron spectroscopy analysis chamber (B13) used for performing the aerosol photoelectron spectroscopy measurements.

15. The adjustable aerodynamic lens system for aerodynamic focusing of aerosols (1) according to claim 14, wherein the aerosol photoelectron spectrometer (B1) further includes an electron energy analyzer (B14) for analyzing photoelectron kinetic energies.
